Europäisches Patentamt

European Patent Office

Office européen des brevets

(19)

(11) Numéro de publication: **0 210 901 B1**

(12) **FASCICULE DE BREVET EUROPEEN**

(45) Date de publication de fascicule du brevet: **02.09.92** (51) Int. Cl.⁵: **G11B 5/53**

(21) Numéro de dépôt: **86401489.9**

(22) Date de dépôt: **04.07.86**

(54) **Dispositif d'enregistrement magnétique à tête tournante.**

(30) Priorité: **26.07.85 FR 8511499**

(43) Date de publication de la demande:
**04.02.87 Bulletin 87/06**

(45) Mention de la délivrance du brevet:
**02.09.92 Bulletin 92/36**

(84) Etats contractants désignés:
**DE GB NL**

(56) Documents cités:
**DE-A- 2 135 865    DE-A- 3 239 306
FR-A- 1 107 292    FR-A- 1 112 704
GB-A- 905 740      US-A- 2 800 384
US-A- 2 909 616    US-A- 3 081 381**

(73) Titulaire: **THOMSON-CSF
51, Esplanade du Général de Gaulle
F-92800 Puteaux(FR)**

(72) Inventeur: **Huijer, Ernst
THOMSON-CSF SCPI 19, avenue de Messine
F-75008 Paris(FR)**
Inventeur: **Lehureau, Jean-Claude
THOMSON-CSF SCPI 19, avenue de Messine
F-75008 Paris(FR)**
Inventeur: **Monlouis, Claude
THOMSON-CSF SCPI 19, avenue de Messine
F-75008 Paris(FR)**

(74) Mandataire: **Lepercque, Jean et al
THOMSON-CSF SCPI
F-92045 PARIS LA DEFENSE CEDEX 67(FR)**

EP 0 210 901 B1

Rank Xerox (UK) Business Services

## Description

L'invention concerne un dispositif d'enregistrement magnétique à tête tournante à excitation fixe particulièrement utilisable dans les appareils d'enregistrement sur bandes magnétiques du type magnétoscopes dans lesquels les enregistrements se font sous formes de lignes d'informations disposées transversalement par rapport à la direction de défilement de la bande.

Une telle tête est utilisable pour l'enregistrement (écriture et/ou lecture) des signaux analogiques ou numériques sur une bande ou autre support magnétique, par exemple comme dans un magnétoscope. Un aspect important de ce type de têtes magnétiques est que la bande est enregistrée par des mouvements mécaniques en deux dimensions : un défilement de la bande et un balayage par une partie tournante.

Il est connu dans la technique que l'enregistrement à grand débit et à haute densité sur bande soit effectué par des tambours tournants, sur lesquels se trouvent plusieurs têtes magnétiques qui balayent la bande selon des pistes parallèles, qui sont orientées obliquement par rapport à la longueur de la bande.

Les têtes sont excitées par l'intermédiaire d'un transformateur dont le circuit magnétique peut être en partie rotatif et en partie fixe.

On connaît aussi des têtes dont l'entrefer est formé par un pôle fixe et un pôle tournant.

L'objet de l'invention concerne une configuration d'un ensemble de têtes magnétiques dont les entrefers se trouvent sur une pièce cylindrique pouvant tourner et qui ont un (ou plusieurs) bobinage commun fixe.

L'avantage de l'invention présentée est d'enlever les bobinages des têtes du tambour tournant. Un tel ensemble de têtes est moins coûteux à fabriquer et aussi moins volumineux.

Par rapport à une tête où l'entrefer est formé par un pôle fixe et un pôle tournant, la tête selon l'invention a l'avantage que la largeur de l'entrefer n'est pas limitée par le mouvement mécanique d'un des pôles, ce qui nécessiterait un écart important entre les pôles.

On peut donc faire des entrefers très fins et ainsi maintenir une bonne résolution d'enregistrement.

Dans l'invention, les entrefers qui séparent la partie fixe et la partie tournante peuvent être construits d'une telle façon que l'efficacité de la tête n'est pas réduite. A cette fin, on augmente la surface des entrefers de manière à diminuer leur reluctance. De plus, on peut mettre un lubrifiant magnétique dans ces entrefers, par exemple un produit connu dans le commerce sous la marque "Ferrofluid".

Le document FR-A-1 107 292 décrit un dispositif d'enregistrement magnétique à tête tournante dans lequel la partie tournante comporte un circuit magnétique comprenant deux couronnes auxquelles sont connectées deux pièces polaires mobiles. Un circuit d'excitation magnétique fixe peut être couplé aux couronnes de la partie tournante. Selon ce document, on peut avoir :
- les couronnes qui affleurent la périphérie cylindrique de la tête avec les deux pièces polaires mobiles affleurant également à la périphérie cylindrique de la tête ;
- ou bien les couronnes qui affleurent une face plane de la tête avec les deux pièces polaires mobiles affleurant également la même face plane de la tête.

Le document US-A-2 800 384 décrit un dispositif utilisant le même principe que celui du document D1 mais qui propose une tête dans laquelle :
- les couronnes affleurent une face plane de la tête ;
- les deux pièces polaires mobiles affleurent la périphérie cylindrique de la tête.

L'invention concerne un dispositif d'enregistrement magnétique à tête tournante comprenant un support d'enregistrement magnétique, une tête cylindrique tournant autour d'un axe de rotation, un circuit d'excitation magnétique fixe, la tête comportant, à sa surface, deux pièces polaires mobiles séparées par un entrefer et reliées magnétiquement chacune à un premier et un deuxième circuit magnétique ayant chacun la forme d'une portion de couronne et assurant un joint tournant au passage du flux magnétique, le circuit d'excitation magnétique fixe possédant une bobine d'excitation induisant un champ magnétique dans un circuit magnétique ayant deux pièces polaires fixes chacune couplée magnétiquement par un entrefer à une desdites couronnes, caractérisé en ce que la tête cylindrique possède une cavité cylindrique de même axe que l'axe de rotation de la tête, lesdites portions de couronnes étant placées sur la paroi cylindrique intérieure de la cavité, le circuit d'excitation fixe étant placé dans ladite cavité de telle façon que les deux pièces polaires fixes soient couplées magnétiquement aux portions de couronnes.

Les différents objets et caractéristiques de l'invention vont être détaillés dans la description qui va suivre faite en se reportant aux figures annexées qui représentent :
- les figures 1 et 2, des schémas simplifiés de modes d'enregistrement sur bandes magnétiques ;
- les figures 3 et 4, des variantes de réalisation de l'invention ;
- les figures 5 et 6, un exemple de réalisation d'une tête selon l'invention dans laquelle les pôles fixes sont disposés à proximité de la surface périphérique cylindrique de la tête avec les pôles mobiles affleurant cette surface périphérique ;

- les figures 7 et 8, une variante de réalisation de la tête représentée en figures 3 et 4 ;
- les figures 9 et 10 des variantes de réalisation de la tête selon l'invention représentée en figures 5 et 6 ;
- les figures 11 et 12 des variantes de réalisation des pôles mobiles selon l'invention ;
- les figures 13, 14 et 15, un exemple de réalisation d'une tête selon l'invention dans laquelle les pôles fixes sont situés à l'intérieur de la tête ;
- les figures 16 à 18, des variantes de réalisation d'une tête selon l'invention représentée en figures 13 à 15 ;
- les figures 19 à 20, un exemple de réalisation de la tête de l'invention dans lequel les pôles mobiles sont réalisés par un dépôt d'une couche de matériau magnétique sur un support cylindrique en verres.

La configuration générale suivant l'invention est un tambour tournant, sur lequel se trouve un nombre de circuits magnétiques analogues à ceux d'une tête simple conventionnelle mais dont la partie bobinage est enlevée. Cette partie du bobinage est dans une position fixe près du tambour.

De cette façon, on crée deux entrefers de couplage de flux entre la partie fixe et tournante. Pour augmenter l'efficacité de la tête, il y a lieu de diminuer la reluctance des entrefers en rendant les surfaces des deux entrefers aussi grandes que possible et les écarts aussi petits que possible. De plus, on peut remplir les entrefers avec un lubrifiant magnétique.

Ainsi le bobinage excite un entrefer d'enregistrement à la fois. Ces entrefers d'enregistrement sont couplés au bobinage les uns après les autres et ils sont excités successivement de telle façon qu'un entrefer est actif pendant son balayage de la bande.

L'invention peut être appliquée de plusieurs façons ; trois paramètres principaux sont identifiés :

- l'orientation de l'entrefer d'enregistrement par rapport à la direction de balayage
- l'orientation de l'axe de rotation du tambour par rapport au défilement de la bande ;
- la position et l'orientation de chacun des deux entrefers de couplage. Celles-ci étant données, la position et l'orientation du bobinage fixe sont pratiquement déterminées.

Il y a d'autres paramètres qui sont moins fondamentaux, comme le nombre d'entrefers d'enregistrement.

Selon l'orientation de la tête d'enregistrement par rapport à la direction de défilement de la bande, on obtient des types différents d'enregistrement.

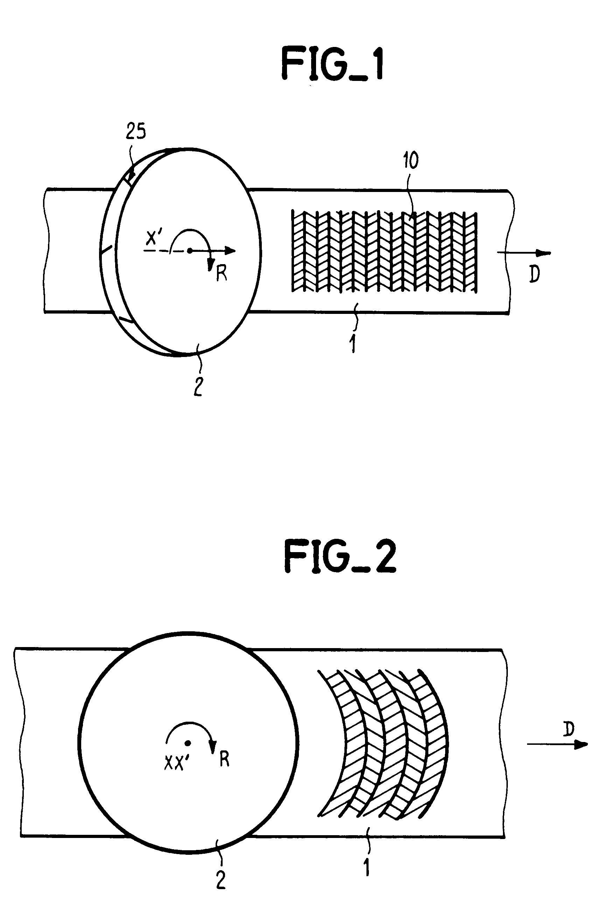

Sur la figure 1, on a représenté une tête 2 dont l'axe de rotation XX' est parallèle à la direction de défilement D d'une bande 1. En tournant, selon le sens R, la tête d'enregistrement enregistre, par des entrefers magnétiques 25, des pistes d'informations telle que 10 sur la bande 1. Le déplacement de la bande 1 dans le sens D commande l'enregistrement de pistes successives. Selon la vitesse de déplacement de la bande 1, les pistes 10 sont plus ou moins inclinées par rapport au sens de déplacement de la bande.

Dans le cas de la figure 2, l'axe de rotation XX' de la tête 2 est disposé perpendiculairement au plan d'enregistrement de la bande 1. Les pistes d'informations enregistrées sont alors disposées en arcs de cercle parallèles en raison du déplacement de la bande 1 selon le sens D.

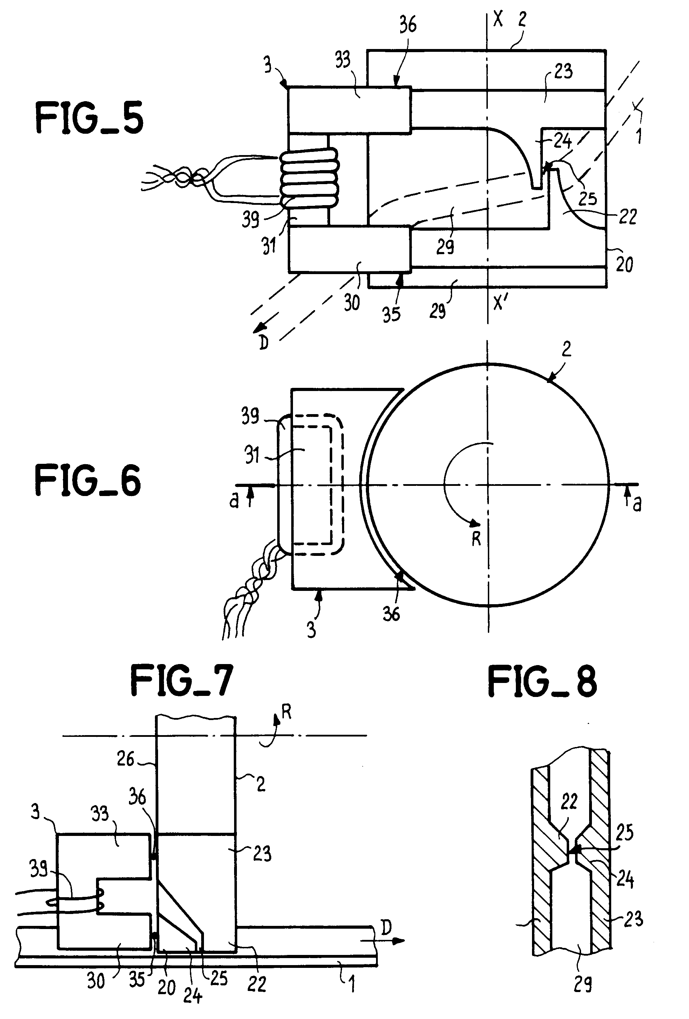

En se reportant aux figures 5 et 6, on va décrire un exemple de réalisation de la tête d'enregistrement de l'invention.

La partie mobile de la tête 2 comporte deux couronnes 20 et 23 cylindriques et de mêmes dimensions. Chaque couronne est munie d'au moins une pièce polaires 22, 24 de telle façon que deux pièces polaires des deux couronnes définissent un entrefer 25. L'ensemble est moulé dans un matériau isolant magnétiquement tel que l'aluminium de façon à former un tambour.

La partie fixe d'excitation 3 comporte un circuit d'excitation 31, sur lequel est monté un bobinage d'excitation 39, et solidaire de pièces polaires fixes 30 et 33. Ces pièces polaires sont placées chacune au niveau d'une couronne 20 ou 23 et épouse, comme cela est représenté en figure 6, la forme cylindrique des couronnes 20 et 23.

La partie mobile 2 tourne selon la flèche R, une bande magnétique 1 se déplace selon la flèche D épousant une partie de la surface extérieure cylindrique de la partie mobile 2. On peut donc effectuer des enregistrements de grande densité comme dans les appareils connus de type magnétoscope.

La réalisation d'une telle tête permet d'obtenir un entrefer 25 très fin. La reluctance des entrefers 35 et 36 entre pièces polaires fixes 30 et 33 et couronnes 20 et 23 est rendue minimale en augmentant la dimension des pièces polaires 30 et 33 selon la périphérie des couronnes 20 et 23.

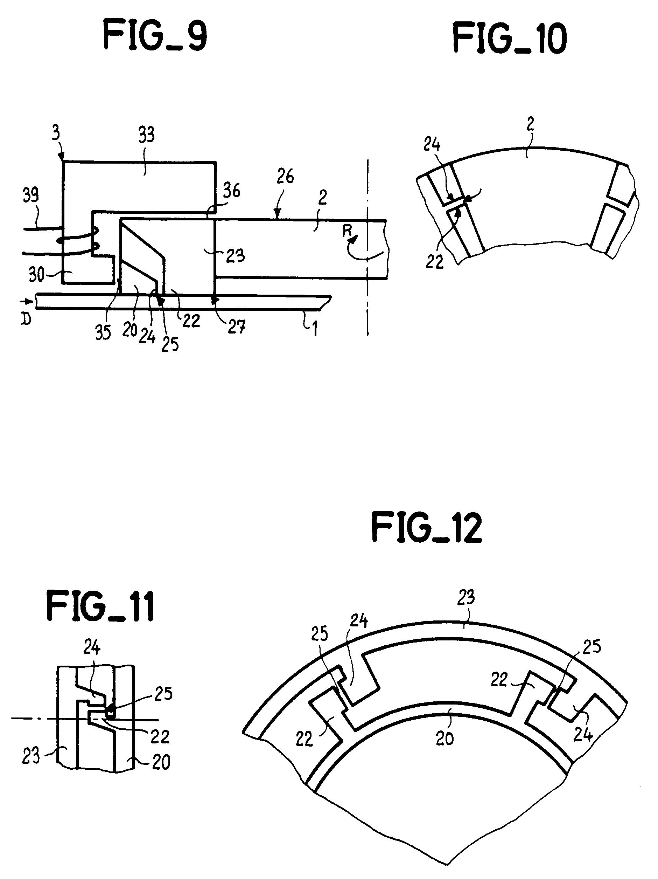

En se reportant aux figures 7 et 8, on va maintenant décrire une variante de réalisation de la tête d'enregistrement de l'invention.

Selon cette variante, la partie mobile 2 de la tête est constituée d'un tambour en aluminium 29 et comportant deux couronnes 20 et 23 en matériau magnétique. La couronne 20 affleure un flanc 26 de la partie mobile et comporte des pièces polaires 24 sur la périphérie cylindrique. La couronne 23 comporte une face circulaire concentrique avec la couronne 20 et affleurant le même flanc 26 de la partie mobile 2 que la couronne 20. Elle possède également des pièces polaires 22 en vis-a-vis avec les pièces polaires 22 et déterminant des entrefers 25. La couronne 23 pour des commodités de réalisation peut relier les deux flancs de la partie mobile 2. Les pièces polaires 22 et 24 peuvent être constituées d'indentation réalisées sur les couronnes 20 et 23 comme représentées en figure 8.

La partie fixe 3 de la tête possède ses deux pièces polaires 30 et 33 placées le long du flanc 26 de la partie mobile 2 et en regard des couronnes 20 et 23.

Selon une autre variante de réalisation représentée par les figures 9 et 10, la couronne 20 affleure la périphérie cylindrique et possède des pièces polaires 24 affleurant un flanc 27 de la partie mobile ou du tambour 2. L'autre couronne 23 affleure l'autre flanc 26 du tambour 2 et possède des pièces polaires affleurant le flanc 27 du tambour. La partie fixe 3 portant le bobinage d'excitation 39 a une pièce polaire 30 placée à proximité de la périphérie cylindrique en regard de la couronne 20 et l'autre pièce polaire 23, à proximité du flanc 26, en regard de la couronne 23.

Dans cette variante de réalisation la bande I se déplace dans un plan parallèle au flanc 27 du tambour 2. Les pistes enregistrées sur la bande sont alors des arcs de cercles.

Les figures 11 et 12 représentent d'autres modes de réalisation des pièces polaires mobiles 22 et 24 et de leur entrefer 25.

La figure 11 représente un mode de réalisation dans lequel les pièces polaires mobiles sont à la périphérie cylindrique de la partie mobile 2 et sont constituées de dents reliées aux couronnes 20 et 23.

La figure 12 représente un mode de réalisation dans lequel les pièces polaires mobiles sont sur un flanc de la partie mobile. Elles sont réalisées de manière similaire à celles de la figure 11.

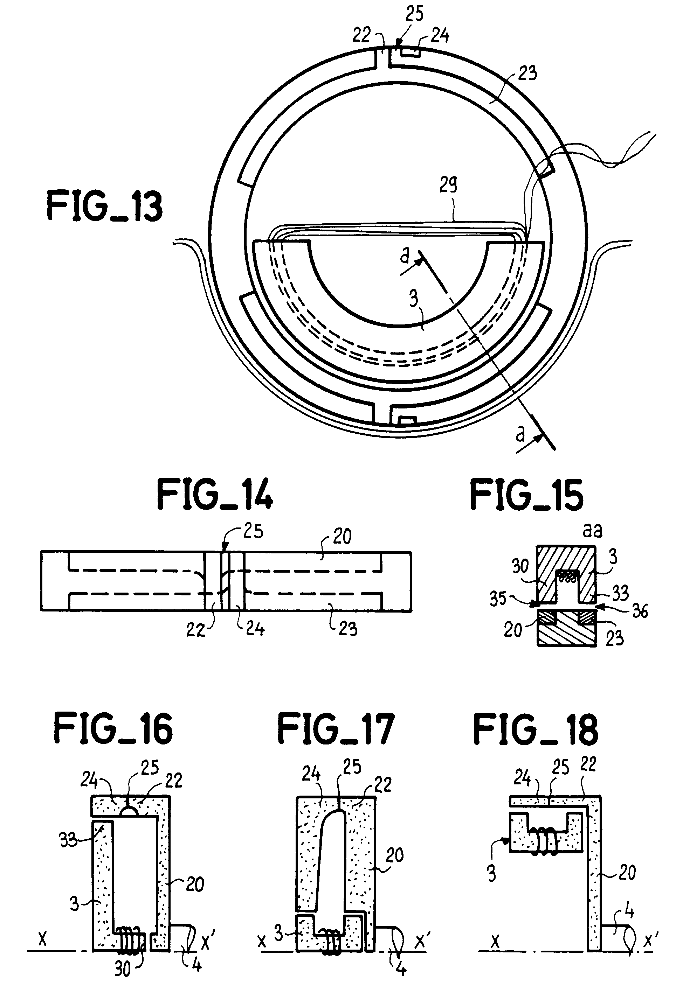

En se reportant aux figures 13, 14 et 15, on va maintenant décrire un exemple de réalisation de l'invention dans lequel la partie tournante 2 est un tambour creux.

Cette partie tournante possède deux couronnes intérieures 20 et 23 (ou des portions de couronnes comme représentées en figure 13) déposées contre les flancs du tambour et affleurant la cavité intérieure du tambour. Des pièces polaires 22 et 24, reliées respectivement aux couronnes 20 et 23, affleurent la périphérie cylindrique du tambour et déterminent à cette périphérie des entrefers 25.

A l'intérieur du tambour est logée la partie fixe 2 de la tête. Cette partie fixe épouse la forme circulaire du tambour et possède une section en forme de U représentée en figure 15, dans laquelle est logé le bobinage d'excitation 39. Les extrémités du U constituant les pièces polaires fixes 30 et 33 et sont placées en regard des couronnes 20 et 23 séparées de ces couronnes par des entrefers 35 et 36.

Les figures 16 à 18 représente des variantes de réalisation de la tête des figures 13 à 15. Selon ces variantes, l'une des couronnes 20 est montée sur un arbre d'entrainement 4 selon l'axe XX'.

Selon la figure 16, la partie fixe 3 est également montée selon l'axe XX'. Une pièce polaire fixe 30 est située selon cet axe tandis que la pièce polaire 33 est située vers la périphérie de la partie mobile.

Selon les figures 17 et 18, la partie fixe 3 a une forme similaire à celle des figures 13 à 15. Selon la figure 17, la partie fixe 3 est disposée selon l'axe XX' tandis que selon la figure 18, la partie fixe 3 est déportée par rapport à l'axe XX' vers la partie interne du tambour de la partie mobile 2.

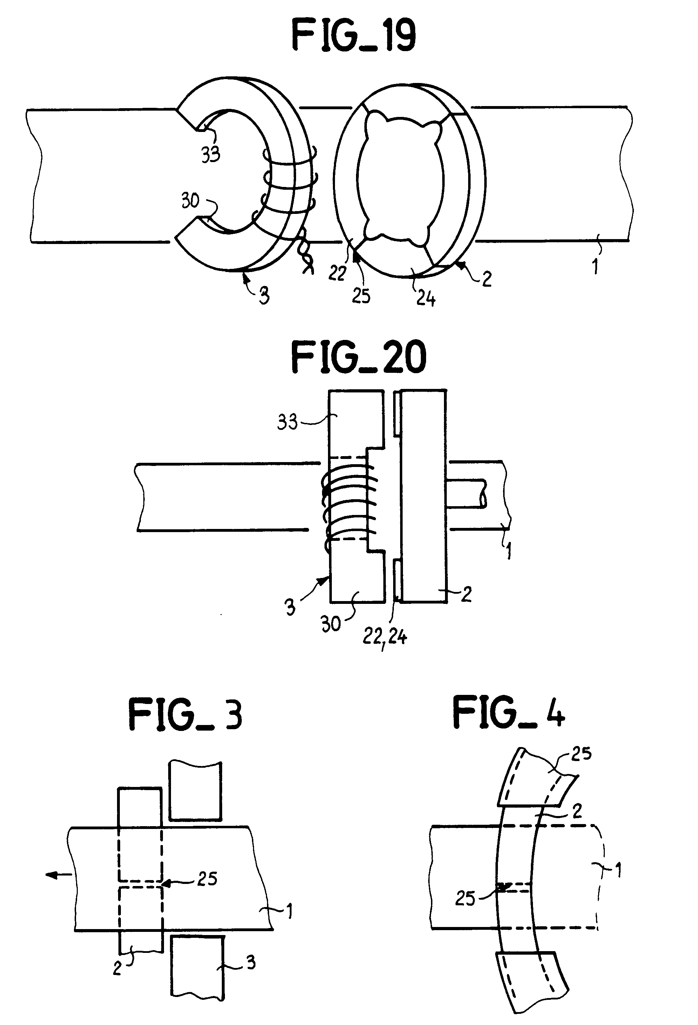

Les figures 3, 4 et 19 à 20 représentent des exemples de réalisation dans lesquels la partie mobile est réalisée sous la forme d'un disque en matériau tel que du verre tandis que les pièces polaires mobiles 22, 24 sont réalisées par des couches d'un matériau tel que du NiFe. Ces pièces polaires mobiles prennent alors la forme de plages métallisées circulaires disposées sur un flanc du disque 2.

La partie fixe 3 de la tête a la forme générale d'une portion de tore, de dimension extérieure le diamètre du disque 2. Aux extrémités ouvertes du tore se trouvent des pièces polaires 30 et 33. Cette partie fixe est accolée au flanc du disque 2 de telle façon que le disque tournant présente successivement les plages métallisées devant les pièces polaires 30 et 33 et que les différents entrefers 25 défilent entre les pièces polaires fixes 30 et 33. La bande 1 se déplace sous les pièces polaires fixes 30 et 33, et le passage des différents entrefers détermine l'enregistrement d'informations magnétiques.

La figure 3 représente une vue de dessus montrant une disposition de l'entrefer 25 parallèlement au déplacement D de la bande 1.

La figure 4 est une vue similaire à celle de la figure 21, la partie mobile ou disque 2 étant alors disposée dans un plan parallèle au plan de la bande I déterminant alors des pistes d'enregistrement circulaires.

## Revendications

**1.** Dispositif d'enregistrement magnétique à tête tournante comprenant un support d'enregistrement magnétique (1), une tête cylindrique (2) tournant autour d'un axe de rotation (XX'), un circuit d'excitatlon magnétique fixe (3), la tête comportant, à sa surface, deux pièces polaires (22, 24) mobiles séparées par un entrefer (25) et reliées magnétiquement chacune à un premier et un deuxième circuit magnétique ayant chacun la forme d'une portion de couronne (20, 23) et assurant un joint tournant au passage du flux magnétique, le circuit d'excitation magnétique fixe (3) possédant une bobine d'excitation induisant un champ magnétique dans un circuit magnétique (31) ayant deux pièces polaires fixes (30, 33) chacune couplée magnétiquement par un entrefer (35, 36) à une desdites couronnes (20, 23), caractérisé en ce que la tête cylindrique (2) possède une cavité cylindrique de même axe (XX') que l'axe de rotation de la tête, lesdites portions de couronnes (20, 23) étant placées sur la paroi cylindrique intérieure de la cavité, le circuit d'excitation fixe (3) étant placé dans ladite cavité de telle façon que les deux pièces polaires fixes (30, 33) soient couplées magnétiquement aux portions de couronnes.

2. Dispositif d'enregistrement magnétique à tête tournante selon la revendication 1, caractérisé en ce que la tête cylindrique (2) est en matériau isolant et que les portions de couronnes ainsi que les pièces polaires mobiles sont réalisées sous forme de couches de matériau à bonne perméabilité magnétique déposées sur les faces de ladite tête cylindrique (2).

## Claims

1. A magnetic recording device with a rotary head comprising a magnetic recording medium (1), a cylindrical head (2) rotating about an axis of rotation (XX'), a fixed magnetic excitation circuit (3), the head comprising, on its surface, two moving pole pieces (22 and 24) separated by a gap (25) and magnetically connected with a first and a second magnetic circuit, respectively, having the form of a portion of a ring (20, 23) and providing a revolving magnetic joint for the passage of magnetic flux, the fixed magnetic excitation circuit (3) having an exciting coil inducing a magnetic field in a magnetic circuit (31) having two fixed pole pieces (30, 33), each being magnetically coupled by a gap (35, 36) with one of the said rings (20, 23), characterized in that the cylindrical head (2) has a cylindrical cavity whose axis (XX') coincides with the axis of rotation of the head, the said ring portions (20, 23) being arranged on the inner cylindrical wall of the cavity, the fixed excitation circuit (3) being arranged in the said cavity in such a manner that the two fixed pole pieces (30, 33) are magnetically coupled with the ring portions.

2. The magnetic recording device with a rotary head as claimed in claim 1, characterized in that the cylindrical head (2) is manufactured of an insulating material and that the ring portions and the moving pole pieces are manufactured in the form of layers of a material with a high magnetic permeability arranged on the surfaces of the said cylindrical head (2).

## Patentansprüche

1. Magnetische Aufzeichnungseinrichtung mit drehbarem Kopf, mit einem magnetischen Aufzeichnungsträger (1), einem zylindrischen Kopf (2), der sich um eine Drehachse (XX') dreht, und einem feststehenden magnetischen Erregerkreis (3), wobei der Kopf auf seiner Oberfläche zwei bewegliche Polstücke (22, 24) aufweist, die durch einen Luftspalt (25) getrennt sind und mit einem ersten bzw. mit einem zweiten Magnetkreis magnetisch verbunden sind, die jeweils die Form eines Kranzabschnittes (20, 23) besitzen und die eine drehende Verbindung für den Durchgang des magnetischen Flusses gewährleisten, wobei der feststehende magnetische Erregerkreis (3) eine Erregerspule besitzt, die in einem magnetischen Kreis (31) mit zwei feststehenden Polstücken (30, 33), von denen jedes durch einen Luftspalt (35, 36) mit einem der Kränze (20, 23) magnetisch gekoppelt ist, ein Magnetfeld induziert, dadurch gekennzeichnet, daß der zylindrische Kopf (2) einen zylindrischen Hohlraum besitzt, dessen Achse (XX') mit der Drehachse des Kopfes zusammenfällt, wobei die Kranzabschnitte (20, 23) an der zylindrischen Innenwand des Hohlraums angeordnet sind und wobei der feststehende Erregungskreis (3) derart im Hohlraum angeordnet ist, daß die zwei feststehenden Polstücke (30, 33) mit den Kranzabschnitten magnetisch gekoppelt sind.

2. Magnetische Aufzeichnungseinrichtung mit drehbarem Kopf gemäß Anspruch 1, dadurch gekennzeichnet, daß der zylindrische Kopf (2) aus isolierendem Material besteht und daß die Kranzabschnitte sowie die beweglichen Polstücke in Form von auf den Stirnseiten des zylindrischen Kopfes (2) aufgebrachten Schichten aus einem Material mit guter magnetischer Permeabilität verwirklicht sind.

# FIG_1

# FIG_2

FIG_5

FIG_6

FIG_7

FIG_8

## FIG_9

## FIG_10

## FIG_11

## FIG_12

**FIG_13**

25
22   24
23
29
a
3
a

**FIG_14**

25   20
22   24   23

**FIG_15**

aa
30   3
35   33
20   36
23

**FIG_16**

24   25   22
33
3
20
X   X'
30   4

**FIG_17**

24   25
22
20
X   3   X'
4

**FIG_18**

24   25   22
20
3
X   X'
4

# FIG_19

# FIG_20

# FIG_3

# FIG_4

10